# EUROPEAN PATENT SPECIFICATION

(11) **EP 3 348 147 B1**
(45) Date of publication and mention of the grant of the patent: **08.07.2020**
(21) Application number: 16843717.6
(22) Date of filing: 07.09.2016
(51) Int. Cl.: A23B 4/023, A22C 25/00, A23L 17/00

(54) **METHOD FOR SEMI-PRESERVING SALTED ANCHOVIES AND ANCHOVY OBTAINED WITH SAID METHOD**
VERFAHREN ZUR HALBKONSERVIERUNG VON GESALZENEN SARDELLEN UND NACH DIESEM VERFAHREN HERGESTELLTE SARDELLEN
PROCÉDÉ DE SEMI-CONSERVE D'ANCHOIS EN SALAISON ET ANCHOIS OBTENU SELON LEDIT PROCÉDÉ

(30) Priority: 11.09.2015 ES 201531298
(43) Date of publication of application: 18.07.2018
(73) Proprietor: Conservas Codesa, S.L., 39770 Laredo (Cantabria) (ES)
(72) Inventor: FERNÁNDEZ TRUEBA, Julián, 39770 Laredo (Cantabria) (ES); ORTIZ FERNÁNDEZ, Fidel, 39770 Laredo (Cantabria) (ES)
(74) Representative: Cabinet Beau de Loménie
(86) International application number: PCT/ES2016/070630
(87) International publication number: WO 2017/042412

(56) References cited:
- ES-A1- 2 200 644
- ES-A1- 2 325 195
- ES-A1- 2 325 195
- ES-A1- 2 333 085
- ES-A1- 2 458 390
- ES-A1- 2 527 798
- ES-A1- 2 527 798
- FR-A1- 2 286 605
- FR-A1- 2 286 605
- KR-A- 20020 023 211
- KR-A- 20140 137 220
- SU-A1- 971 206
- SU: ' Cómo se hace una anchoa in conserva?' WEBOSFRITOS, [Online] 01 October 2012, XP055518554 Retrieved from the Internet: <URL:http://webosfritos.es/2012/10/como-se- hace-una-anchoa-in-conserva> [retrieved on 2016-07-15]
- CARLOS DUBE: 'ANCHOAS EN SALMUERA,LIMPIEZA (PARTE II)' MERCADOCALABAJIO, [Online] 01 December 2008, pages 1 - 10, XP055519611 Retrieved from the Internet: <URL:HTTP://WWW.MERCADOCALABAJIO.COM/2008/1 2/ANCHOAS-IN-SALMUERA-LIMPIEZA-PARTE-II.HTM L> [retrieved on 2016-07-15]
- 'LA INDUSTRIA CONSERVERA LLASTRINA' ELBUSCOLU, [Online] 31 October 2014, pages 1 - 7, XP055518560 Retrieved from the Internet: <URL:WWW.ELBUSCOLU.COM/MONOGRAFICOS/LA-INDU STRIA-CONSERVERA-ILUSRINA/16997>
- MADUIXA: 'Anchoas of Hondarribia. Preparación and aliño. Parte II' SALSEANDO EN LA COCINA, [Online] 07 April 2011, pages 1 - 21, XP055519626 Retrieved from the Internet: <URL:HTTP://WWW.SALSEANDOENLACOCINA.COM/201 1/04/ANCHOAS-DE-HONDARRIBIA-PREPARACION-Y.H TML>

## Description

### Field of the Art

The present invention relates to the semi-preservation of fish, proposing a method for semi-preserving salted anchovies with which a high-quality product with particular organoleptic and salubrious characteristics is obtained.

### State of the Art

Salted anchovy is a product with a high gastronomical value obtained from fresh European anchovies (a type of fish from the genus *Engraulis*) which are subjected to a long curing or maturation process, after which anchovy fillets are obtained as the end product.

The semi-preservation of fish uses only salt as the sterilization medium, so salt is essential to assure suitable preservation of the anchovy. The method for preserving anchovies by means of salting is conventionally performed with sea salt.

The method for preservation using sea salt consists of a first phase in which the fresh anchovies are introduced in a tank containing salt and drinking water at a concentration of 370 grams of salt per liter of water; a second phase in which the anchovies are beheaded and gutted; a third phase in which layers of anchovies and layers of salt are arranged in an alternating manner in a container, in a proportion of between 250 and 350 grams of sea salt per kilogram of anchovies, subjecting the entire arrangement to pressure to favor the release of water and fat from the anchovies; a fourth phase in which the anchovies are cleaned, removing the excess salt and the remaining skin and bones; a fifth phase in which the anchovies are dried by removing excess moisture; a sixth phase in which the anchovies are filleted; and a final packaging phase in which the anchovy fillets are introduced in cans together with edible oil; the cans then being closed, cleaned, labeled, and stored in a cold store to subsequently be sold on the market.

This conventional preservation method results in anchovies with a high concentration of sodium chloride (NaCl) of about 10.45% by weight in relation to the total weight of the anchovy, and a concentration of about 4.503 grams of sodium per 100 grams of anchovy.

On the other hand, excessive consumption of sodium is known to be detrimental to health; specifically, the World Health Organization recommends a daily sodium intake not exceeding 2300 milligrams since refined table salt prepared from sea salt is refined during production with chemicals that virtually reduce it to sodium chloride, such that when said salt is ingested, the body has to overexert itself to eliminate the excess sodium. For instance also documents ES2200644 and ES2325195 disclose prior art methods for preserving anchovies.

According to the foregoing, there is a need to provide a method for preservation which allows obtaining anchovies with a lower sodium content, while at the same time assuring suitable preservation of the anchovy, maintaining optimum quality conditions.

### Object of the Invention

The invention proposes a method for semi-preserving salted anchovies whereby anchovies with characteristics improving the organoleptic and salubrious properties of processed anchovies are obtained.

The method for semi-preserving salted anchovies according to the invention comprises:
- a presalting phase in which the anchovies are introduced in a tank of drinking water and Himalayan pink salt;
- a phase in which the anchovies are beheaded and partially gutted;
- a packing and maturation phase in which layers of anchovies and layers of Himalayan pink salt are arranged in an alternating manner in a container, subjecting the arrangement of anchovies and salt to pressure;
- a cleaning phase in which the external salt is removed from the anchovies, the anchovies are completely gutted, the skin is removed, and they are introduced in a bath of drinking water and Himalayan pink salt to recover external salinity;
- a draining phase in which excess moisture is removed from the anchovies;
- a phase in which the anchovies are filleted and the anchovy fillets are canned together with edible oil.

In the presalting phase, the anchovies are introduced in a tank of drinking water and Himalayan pink salt at a concentration of at least 400 grams of Himalayan pink salt per liter of drinking water used. The anchovies are kept in the tank for a time of at least 10 hours.

Preferably, between 200 and 700 grams of Himalayan pink salt per kilogram of anchovies are used, and even more preferably between 400 and 500 grams of Himalayan pink salt per kilogram of anchovies are used in the packing and maturation phase in the container in which layers of anchovies and layers of Himalayan pink salt are arranged in an alternating manner. In said packing and maturation phase, the layers of anchovies and Himalayan pink salt are subjected to pressure for a time between 6 and 24 months.

In the cleaning phase, the anchovies are introduced in the bath of drinking water and Himalayan pink salt for at least 10 seconds to recover external salinity.

According to the foregoing, semi-preserved anchovies with a low sodium content and with organoleptic and salubrious properties that make them more valued than anchovies treated by means of the conventional method using sea salt are obtained.

### Detailed Description of the Invention

The method for semi-preserving anchovies according to the invention comprises the following phases:

### Presalting phase

When the fresh anchovies are received in the factory, they are subjected to a prior presalting phase to enable better chloride penetration in the flesh of the anchovies and to allow these anchovies to acquire a certain degree of firmness making them easier to handle in subsequent steps of the method.

To that end, the anchovies are introduced in a tank containing drinking water and Himalayan pink salt at a concentration between about 20° and 25° Baumé, the anchovies being kept in the tank for a time between about 2 and 20 hours, until the Himalayan pink salt has penetrated the flesh of the anchovies and the anchovies have acquired a suitable degree of firmness.

Preferably, it has been envisaged to use a concentration of 400 grams of Himalayan pink salt per liter of drinking water used, for a time of at least 10 hours.

### Beheading and gutting phase

After the presalting phase, the anchovies are taken out of the container and placed on cleaning tables where specialized staff manually removes the heads and guts from the anchovies. The anchovies are not completely gutted to facilitate the action of proteolytic enzymes originating from the digestive tract during the subsequent maturation and maturation step.

The time that each anchovy is on the cleaning tables is less than 10 minutes to assure that the anchovy is not out of contact with the Himalayan pink salt for too long.

### Packing and maturation phase

In this phase, after beheading and gutting the anchovies are arranged in an alternating manner in a container in layers of anchovies and layers of Himalayan pink salt, and pressure is applied by means of specific presses on the upper layer of salt and fish, favoring the contact of the anchovy with the Himalayan pink salt and the release of water and fat from the anchovies.

Pressure is continuously applied on the anchovies in the containers for 6 to 24 months until they dry up. In this drying method, two flows from opposite directions are generated; on one hand, the sodium chloride of the Himalayan pink salt diffuses into the anchovies, and the water and fat from the anchovies diffuse into the salting medium, giving rise to a significant drop in water activity, which inhibits the development of pathogenic or spoilage microorganisms. In this saline medium, the fish undergoes a controlled biochemical process of variable duration until a pinkish-brown product with firm and elastic flesh and pleasant characteristic smell is obtained.

Preferably, it has been envisaged to provide between 200 and 700 grams of Himalayan pink salt per kilogram of anchovies, and even more preferably between 400 and 500 grams of Himalayan pink salt per kilogram of anchovies, in the containers.

### Cleaning phase

After having completed the anchovy maturation phase, the layer of excess Himalayan pink salt covering the anchovies is removed and the anchovies are completely gutted.

The fish then passes through a barrel with hot water between 50°C and 85°C to remove the skin from the anchovies, and then through a barrel with drinking water at room temperature to remove the remaining skin, dirt, and fat that may be left behind after going through the barrel of hot water.

After removing the skin, the anchovies are introduced in a bath of drinking water and Himalayan pink salt at a concentration between 14 and 25° Baume for at least 10 seconds so that the anchovies recover external saltiness.

Finally, the tails, fins, and bones of the anchovies that are left behind are removed by means of a cutting process.

### Draining phase

In this phase, excess moisture acquired in the previous phase is removed to prevent microbial proliferation in the product, adjusting the water content levels to the muscle level of the anchovy. To that end, the anchovies are drained for a time between 3 and 60 seconds in centrifuge machines or manually with towels.

### Filleting and packaging phase

After the draining phase, the anchovies are filleted, obtaining two fillets from each anchovy, one from each side of the backbone, the anchovy fillets are then introduced in cans together with edible olive oil, preferably ecological extra virgin olive oil; the cans then being closed, cleaned, labeled, and stored in a cold store between 5°C and 10°C.

A comparison of the method for semi-preserving anchovies using Himalayan pink salt according to the invention and the conventional method for semi-preserving using sea salt is shown below.

Two tanks were used in the anchovy presalting phase, a first tank with conventional sea salt and a second tank with Himalayan pink salt. The same amount of anchovies was introduced in both tanks. Drinking water and sea salt were added in the first tank at a concentration of 370 grams of salt per liter of drinking water, and drinking water and Himalayan pink salt were added in the second tank at a concentration of 400 grams of salt per liter of drinking water.

Two containers were used in the anchovy packing and maturation phase, a first container with sea salt and a second container with Himalayan pink salt. Layers of anchovies and sea salt were arranged in an alternating manner in the first container in a proportion of 350 grams of sea salt per kilogram of anchovies, whereas layers of anchovies and Himalayan pink salt were arranged in an alternating manner in the second container in a proportion of 500 grams of Himalayan pink salt per kilogram of anchovies. The pressing pressures and maturation time were the same for anchovies treated with sea salt and anchovies treated with Himalayan pink salt.

In the cleaning phase, in order to recover the external saltiness, anchovies treated with sea salt were introduced in a bath of drinking water and sea salt for 10 seconds, and anchovies treated with Himalayan pink salt are introduced in a bath of drinking water and Himalayan pink salt for 10 seconds as well. The salinity concentrations of both baths were the same as in the presalting phase.

Both types of anchovies were packaged in respective cans with ecological extra virgin olive oil and chilled at a temperature of 7°C. The remaining conditions of the method for preserving anchovies were the same for both anchovies treated with sea salt and anchovies treated with Himalayan pink salt. Table 1. Comparative table showing the results of physicochemical analyses of anchovies treated with sea salt and anchovies treated with Himalayan pink salt.

| | Anchovy with sea salt | Anchovy with Himalayan pink salt |
|---|---|---|
| Chlorides (% NaCl) | 10.45 | 9.84 |
| Sodium (g/100 g) | 4.503 | 3.832 |
| Magnesium (ppm) | 346 | 501 |
| Iron (ppm) | 25 | 24 |
| Calcium (ppm) | 958 | 1278 |
| Moisture (%) | 43.57 | 42.5 |

As can be seen in Table 1, although a higher concentration of salt was used in the method for producing anchovies treated with Himalayan pink salt compared to anchovies treated with sea salt, the anchovies produced with Himalayan pink salt have a lower sodium content, i.e., 3.832 grams of sodium per 100 grams of anchovies with respect to 4.503 grams of sodium per 100 grams of anchovies treated with sea salt. This means that anchovies produced with Himalayan pink salt have 14.9% less sodium compared to anchovies produced with sea salt. On the other hand, anchovies treated with Himalayan pink salt have a higher concentration of magnesium (44.7%) and calcium (33.4%), both anchovies having similar characteristics in terms of moisture.

Anchovies treated with Himalayan pink salt therefore give rise to a product with a lower sodium content, maintaining the same moisture conditions, organoleptic properties, and quality level as anchovies treated with sea salt, so it is a product that is suitable for those with high blood pressure, heart problems, kidney problems, or osteoporosis, who must control their sodium intake. On the other hand, the higher contribution of calcium and magnesium is beneficial for improving consumer bone health.

## Claims

1. A method for semi-preserving salted anchovies, **characterized in that** it comprises:
- a presalting phase in which the anchovies are introduced in a tank of drinking water and Himalayan pink salt;
- a phase in which the anchovies are beheaded and partially gutted;
- a packing and maturation phase in which layers of anchovies and layers of Himalayan pink salt are arranged in an alternating manner in a container, subjecting the arrangement of anchovies and salt to pressure;
- a cleaning phase in which the external salt is removed from the anchovies, the anchovies are completely gutted, the skin is removed, and they are introduced in a bath of drinking water and Himalayan pink salt to recover external salinity;
- a draining phase in which excess moisture is removed from the anchovies;
- a phase in which the anchovies are filleted and the anchovy fillets are canned together with edible oil.

2. The method for semi-preserving salted anchovies according to claim 1, **characterized in that** in the presalting phase the anchovies are introduced in a tank of drinking water and Himalayan pink salt at a concentration of at least 400 grams of Himalayan pink salt per liter of drinking water used.

3. The method for semi-preserving salted anchovies according to the preceding claim, **characterized in that** the anchovies are kept in the tank for a time of at least 10 hours.

4. The method for semi-preserving salted anchovies according to any one of the preceding claims, **characterized in that** between 200 and 700 grams of Himalayan pink salt per kilogram of anchovies are used in the packing and maturation phase in the container in which layers of anchovies and layers of Himalayan pink salt are arranged in an alternating manner.

5. The method for semi-preserving salted anchovies according to any one of the preceding claims, **characterized in that** between 400 and 500 grams of Himalayan pink salt per kilogram of anchovies are used in the packing and maturation phase in the container in which layers of anchovies and layers of Himalayan pink salt are arranged in an alternating manner.

6. The method for semi-preserving salted anchovies according to any one of the preceding claims, **characterized in that** in the packing and maturation phase the layers of anchovies and Himalayan pink salt are subjected to pressure for a time between 6 and 24 months.

7. The method for semi-preserving salted anchovies according to any one of the preceding claims, **characterized in that** in the cleaning phase the anchovies are introduced in the bath of drinking water and Himalayan pink salt for at least 10 seconds to recover external salinity.

8. The method for semi-preserving salted anchovies according to any one of the preceding claims, **characterized in that** the anchovy fillets are canned together with ecological extra virgin olive oil.

9. Anchovy obtained according to the method for semi-preserving defined in any one of the preceding claims.

## Patentansprüche

1. Verfahren zur Halbkonservierung von gesalzenen Sardellen, **dadurch gekennzeichnet, dass** es umfasst:
- eine Phase des Vorsalzens, in der die Sardellen in einen Tank mit Trinkwasser und rosa Himalaya-Salz eingeführt werden,
- eine Phase, in der die Sardellen geköpft und teilweise ausgenommen werden,
- eine Phase des Packens und Reifens, in der Schichten von Sardellen und Schichten von rosa Himalaya-Salz auf eine abwechselnde Weise in einem Behälter angeordnet werden, wobei die Anordnung von Sardellen und Salz Druck ausgesetzt wird,
- eine Phase der Reinigung, in der das äußere Salz von den Sardellen entfernt wird, die Sardellen vollständig ausgenommen werden, die Haut entfernt wird und sie in ein Bad aus Trinkwasser und rosa Himalaya-Salz eingeführt werden, um den äußeren Salzgehalt wiederherzustellen,
- eine Phase des Abtropfens, in der überschüssige Feuchtigkeit von den Sardellen entfernt wird,
- eine Phase, in der die Sardellen filetiert werden und die Sardellenfilets zusammen mit Speiseöl eingedost werden.

2. Verfahren zur Halbkonservierung von gesalzenen Sardellen nach Anspruch 1, **dadurch gekennzeichnet, dass** in der Phase des Vorsalzens die Sardellen in einen Tank mit Trinkwasser und rosa Himalaya-Salz mit einer Konzentration von mindestens 400 Gramm rosa Himalaya-Salz pro verwendetem Liter Trinkwasser eingeführt werden.

3. Verfahren zur Halbkonservierung von gesalzenen Sardellen nach dem vorhergehenden Anspruch, **dadurch gekennzeichnet, dass** die Sardellen während eines Zeitraums von mindestens 10 Stunden in dem Tank gehalten werden.

4. Verfahren zur Halbkonservierung von gesalzenen Sardellen nach einem der vorhergehenden Ansprüche, **dadurch gekennzeichnet, dass** in der Phase des Packens und Reifens in dem Behälter, in dem Schichten von Sardellen und Schichten von rosa Himalaya-Salz auf eine abwechselnde Weise angeordnet werden, zwischen 200 und 700 Gramm rosa Himalaya-Salz pro Kilogramm Sardellen verwendet werden.

5. Verfahren zur Halbkonservierung von gesalzenen Sardellen nach einem der vorhergehenden Ansprüche, **dadurch gekennzeichnet, dass** in der Phase des Packens und Reifens in dem Behälter, in dem Schichten von Sardellen und Schichten von rosa Himalaya-Salz auf eine abwechselnde Weise angeordnet werden, zwischen 400 und 500 Gramm rosa Himalaya-Salz pro Kilogramm Sardellen verwendet werden.

6. Verfahren zur Halbkonservierung von gesalzenen Sardellen nach einem der vorhergehenden Ansprüche, **dadurch gekennzeichnet, dass** in der Phase des Packens und des Reifens die Schichten von Sardellen und rosa Himalaya-Salz während eines Zeitraums von zwischen 6 und 24 Monaten Druck ausgesetzt werden.

7. Verfahren zur Halbkonservierung von gesalzenen Sardellen nach einem der vorhergehenden Ansprüche, **dadurch gekennzeichnet, dass** in der Phase der Reinigung die Sardellen während mindestens 10 Sekunden in das Bad aus Trinkwasser und rosa Himalaya-Salz eingeführt werden, um den äußeren Salzgehalt wiederherzustellen.

8. Verfahren zur Halbkonservierung von gesalzenen Sardellen nach einem der vorhergehenden Ansprüche, **dadurch gekennzeichnet, dass** die Sardellenfilets zusammen mit ökologischem extra nativem Olivenöl eingedost werden.

9. Sardelle, die nach dem Verfahren zur Halbkonservierung, das in einem der vorhergehenden Ansprüche definiert ist, erhalten wird.

## Revendications

1. Procédé de semi-conserve d'anchois salés, **caractérisé en ce qu'**il comprend :
- une phase de pré-salage dans laquelle les anchois sont introduits dans un réservoir d'eau potable et de sel rose de l'Himalaya ;
- une phase dans laquelle les anchois sont étêtés et partiellement vidés ;
- une phase de tassement et de maturation dans laquelle des couches d'anchois et des couches de sel rose de l'Himalaya sont disposées en alternance dans un récipient, soumettant l'agencement d'anchois et de sel à une pression ;
- une phase de nettoyage dans laquelle le sel externe est retiré des anchois, les anchois sont complètement vidés, la peau est retirée, et ils sont introduits dans un bain d'eau potable et de sel rose de l'Himalaya pour récupérer une salinité externe ;
- une phase de drainage dans laquelle l'humidité en excès est retirée des anchois ;
- une phase dans laquelle les anchois sont découpés en filets et les filets d'anchois sont mis en boîte conjointement avec une huile comestible.

2. Procédé de semi-conserve d'anchois salés selon la revendication 1, **caractérisé en ce que**, dans la phase de pré-salage, les anchois sont introduits dans un réservoir d'eau potable et de sel rose de l'Himalaya à une concentration d'au moins 400 grammes de sel rose de l'Himalaya par litre d'eau potable utilisé.

3. Procédé de semi-conserve d'anchois salés selon la revendication précédente, **caractérisé en ce que** les anchois sont maintenus dans le réservoir pendant un temps d'au moins 10 heures.

4. Procédé de semi-conserve d'anchois salés selon l'une quelconque des revendications précédentes, **caractérisé en ce qu'**entre 200 et 700 grammes de sel rose de l'Himalaya par kilogramme d'anchois sont utilisés dans la phase de tassement et de maturation dans le récipient dans lequel des couches d'anchois et des couches de sel rose de l'Himalaya sont disposées en alternance.

5. Procédé de semi-conserve d'anchois salés selon l'une quelconque des revendications précédentes, **caractérisé en ce qu'**entre 400 et 500 grammes de sel rose de l'Himalaya par kilogramme d'anchois sont utilisés dans la phase de tassement et de maturation dans le récipient dans lequel des couches d'anchois et des couches de sel rose de l'Himalaya sont disposées en alternance.

6. Procédé de semi-conserve d'anchois salés selon l'une quelconque des revendications précédentes, **caractérisé en ce que**, dans la phase de tassement et de maturation, les couches d'anchois et de sel rose de l'Himalaya sont soumises à une pression pendant un temps compris entre 6 et 24 mois.

7. Procédé de semi-conserve d'anchois salés selon l'une quelconque des revendications précédentes, **caractérisé en ce que**, dans la phase de nettoyage, les anchois sont introduits dans le bain d'eau potable et de sel rose de l'Himalaya pendant au moins 10 secondes pour récupérer une salinité externe.

8. Procédé de semi-conserve d'anchois salés selon l'une quelconque des revendications précédentes, **caractérisé en ce que** les filets d'anchois sont mis en boîte conjointement avec de l'huile d'olive extra vierge écologique.

9. Anchois obtenu conformément au procédé de semi-conserve défini dans l'une quelconque des revendications précédentes.
